# EUROPEAN PATENT APPLICATION

(11) **EP 2 581 861 A1**
(43) Date of publication of application: **17.04.2013**
(21) Application number: 10853097.3
(22) Date of filing: 16.08.2010
(51) Int. Cl.: G06Q 10/00

(54) **NETWORK PLATFORM SYSTEM AND MANAGEMENT METHOD THEREOF**

(30) Priority: 13.06.2010 CN 201010202383
(71) Applicant: Shenzhen MPR Technology Co., Ltd, Shenzhen, Guangdong 518049 (CN)
(72) Inventor: LI, Zhengfang, Shenzhen Guangdong 518049 (CN); LV, Yingfeng, Shenzhen Guangdong 518049 (CN); ZHOU, Hong, Shenzhen Guangdong 518049 (CN)
(74) Representative: Beetz & Partner
(86) International application number: PCT/CN2010/076013
(87) International publication number: WO 2011/156987

(57) **Abstract**

A network platform system and a network platform management method are provided. The network platform system implements publishing and using service for multimedia printing reading material by managing the unique code of the multimedia printing reading material cross media relating relationship. The network platform system includes a publishing business management platform, a reader service platform , a publishing business database and a reader platform database; the publishing service platform is used for issuing a unique code of the multimedia printing reading material cross media relating relationship to a publisher, and for syncluonizing/issuing the data in the publishing business database to the reader platform database; and the reader service platform is connected with the reader platform database, and is used for obtaining the multimedia information from the reader platform database according to the request submitted by a reader, and providing it to the reader. By implementing the scheme, automatization and unification of the multimedia printing reading material publishing and using service can be realized, and a digital publishing service platform with copyright protection is provided to a publisher.

## Description

### Cross Reference to Related Applications

This application is a national phase application of PCT/CN2010/076013, filed on August 16, 2010. The contents of PCT/CN2010/076013 are all hereby incorporated by reference.

### BACKGROUND

### Technical Field

The present application relates to the field of network management, and more particularly to a network platform system and a management method.

### Related Art

Conventionally, people always read conventional publications such as books and newspapers with eyes. However, in an aspect, this manner of obtaining information increasingly cannot adapt to current development of multimedia information; in another aspect, blind persons or other persons suffering from eye illnesses fundamentally cannot independently read this conventional publication; in still another aspect, for illiterate or less literate children, it is adverse to their reading and learning.

Therefore, a voice reading publication has emerged in recent years, and content printed in a book may be decoded and pronounced by using a two-dimensional code voice reading apparatus, so as to be heard by a reader.

Generally, a two-dimension code is in a main form of plain code. On a voice reading publication, a two-dimensional code symbol is obviously printed between text paragraphs or on a certain apparent position of a page, and a reading device may read texts and convert them into a corresponding sound to be pronounced only if a reading device is aligned with the two-dimensional code symbol. This plain code can only be printed at a blank of a publication layout, and generally emerges in a form of single code, thereby influencing layout aesthetics. Moreover, in order to make the plain code be conveniently found, the plain code is generally printed in large size, so although the requirement for printing precision is low, the layout of the original image-text is influenced.

The two-dimensional code voice reading apparatus and the publishing system which are commercially available adopt a conventional two-dimensional code to identify a pronunciation position, and the number of pronunciation indexes is limited, so that different publications share the same encoding code, and therefore a pronunciation file in the reading apparatus corresponding to a target publication often has wrong pronunciation content for the reading content.

### SUMMARY

The technical problem to be solved by the present application lies in providing a network platform system and a management method. A Multimedia Print Reader (MPR) may be managed through a network platform.

Therefore, in an aspect, an embodiment of the present application provides a network platform system, used for implementing publishing and using services for an MPR by managing a unique code of a cross-media (carrier) relating relationship of the MPR, including a publishing business management platform, a reader service platform, a publishing business database and a reader platform database.

The publishing business management platform is used for issuing a unique code of a cross-carrier relating relationship of an MPR to a publisher, in which, the unique code of the cross-carrier relating relationship of the MPR is used for uniquely identifying a cross-carrier relating relationship of the MPR, so as to ensure uniqueness of all codes generated under a specific unique code; and is further used for storing multimedia information of the MPR submitted by the publisher in the publishing business database, and synchronzing/issuing data in the publishing business database to the reader platform database.

The reader service platform is connected to the reader platform database, and is used for obtaining the multimedia information from the reader platform database according to a request submitted by a reader, and providing the multimedia information to the reader.

The MPR may include an MPR publication, the unique code of the cross-carrier relating relationship of the MPR may includes a prepositive code of an MPR code, and information of the unique code of the cross-carrier relating relationship of the MPR is stored and issued in a form of authorization file.

The publishing business management platform may further be used for generating a management request of the unique code of the cross-carrier relating relationship of the MPR according to a request of the publisher, and sending the management request of the unique code of the cross-carrier relating relationship of the MPR to the organization operation management platform; and the organization operation management platform is further used for performing a management operation according to the received management request of the unique code of the cross-carrier relating relationship of the MPR.

The management request may include a revocation request or postponement request, and the management operation includes revoking the unique code of the cross-carrier relating relationship of the MPR or postponing service life of the unique code of the cross-carrier relating relationship of the MPR.

The publishing business management platform may further be used for storing the multimedia information of the MPR submitted by the publisher in the database of the network platform, and managing the multimedia information of the MPR.

The organization operation management platform may further be used for converting the multimedia information of the MPR stored in the database of the network platform, obtaining multimedia information of a standard MPR and storing the multimedia information in the database of the network platform.

In another aspect, an embodiment of the present application further provide a network platform management method, used in a network platform system, and implementing publishing and using services for an MPR by managing a unique code of a cross-media relating relationship of the MPR, the system includes a publishing business management platform, a reader service platform, a publishing business database and a reader platform database, and the method includes:
issuing, by the publishing business management platform, a unique code of a cross-carrier relating relationship of an MPR to a publisher, in which, the unique code of the cross-carrier relating relationship of the MPR is used for uniquely identifying a cross-carrier relating relationship of the MPR, so as to ensure uniqueness of all codes generated under a specific unique code;
storing, by the publishing business management platform, multimedia information of the MPR submitted by the publisher in the publishing business database, and synchronizing/issuing data in the publishing business database to the reader platform database; and
obtaining, by the reader service platform, the multimedia information from the reader platform database according to a request submitted by a reader, and providing the multimedia information to the reader.

The MPR may include an MPR publication, the unique code of the cross-carrier relating relationship of the MPR includes a prepositive code of an MPR code, and information of the unique code of the cross-carrier relating relationship of the MPR is stored and issued in a form of authorization file.

The method may further include: generating, by the publishing business management platform, a management request of the unique code of the cross-carrier relating relationship of the MPR according to a request of the publisher, and sending the management request of the unique code of the cross-carrier relating relationship of the MPR to an organization operation management platform; and performing, by the organization operation management platform, a management operation according to the received management request of the unique code of the cross-carrier relating relationship of the MPR, in which the management request includes a revocation request or postponement request, and the management operation includes revoking the unique code of the cross-carrier relating relationship of the MPR or postponing service life of the unique code of the cross-carrier relating relationship of the MPR.

The method may further include: storing, by the publishing business management platform, the multimedia information of the MPR submitted by the publisher in the database of the network platform, and managing the multimedia information of the MPR.

The method may further include: converting, by the organization operation management platform, the multimedia information of the MPR stored in the database of the network platform, obtaining multimedia information of a standard MPR and storing the multimedia information in the database of the network platform.

The method may further include: seeking, by an application of a client, according to printing reading material information including the unique code of the cross-carrier relating relationship of the MPR, an address of a corresponding printing reading material database, in which the multimedia information of the MPR is stored in the printing reading material database; and
obtaining multimedia information corresponding to the printing reading material information in the corresponding printing reading material database according to the address of the printing reading material database, so as to implement real-time and online reading.

In the network platform system and the corresponding management method in the embodiments of the present application, the platform may issue the unique code of the cross-carrier relating relationship of the MPR in a unified manner, so as to ensure uniqueness of the unique code of the cross-carrier relating relationship of the MPR obtained by the publisher, avoid the possibility that different publications share the same encoding code, and improve user reading experience; and may further implement automatization and unification for publishing and using services of an MPR, and provide a digital publishing service platform with copyright protection for a publisher. Meanwhile, the publishing business database may copy basic data (such as book name, author, and ISBN) of the MPR into the reader platform database through this operation manner of synchronizing/issuing, while the basic data is only readable in the reader service platform, and in doing so, two objectives are provided, one of which is to back up, and the other of which is to ensure data consistency.

### BRIEF DESCRIPTION OF THE DRAWINGS

To illustrate the technical solution in the embodiments of the present application or in the prior art more clearly, the following briefly introduces the accompanying drawings required for describing the embodiments or the prior art. Apparently, the accompanying drawings in the following description show merely some embodiments of the present application, and a person of ordinary skill in the art may still derive other drawings from these accompanying drawings without creative efforts.
FIG. 1 is a schematic view of a specific formation of a network platform according to an embodiment of the present application;
FIG. 2 is a schematic view of another specific formation of the network platform according to an embodiment of the present application;
FIG. 3 is a schematic view of a specific architecture hierarchy of the network platform according to an embodiment of the present application;
FIG. 4a is a schematic view of a specific formation of a multilingual database according to an embodiment of the present application;
FIG. 4b is a schematic view of a specific formation of a zone-based database according to an embodiment of the present application;
FIG. 4c is a schematic view of a specific formation of a type-based distributed database according to an embodiment of the present application;
FIG. 5 is a specific schematic view of an interface applying for a prepositive code according to an embodiment of the present application;
FIG. 6 is a specific schematic view of a business operation interface provided to a publisher for use according to an embodiment of the present application;
FIG. 7 is a specific schematic view of an uploading interface provided by an MPR publishing business management platform according to an embodiment of the present application;
FIG. 8 is a specific flow chart of a network platform management method according to an embodiment of the present application;
FIG. 9 is a schematic flow chart of uploading multimedia information according to an embodiment of the present application;
FIG. 10 is a schematic flow chart of issuing a unique code of a cross-carrier relating relationship of an MPR according to an embodiment of the present application;
FIG. 11 is a schematic flow chart of issuing an MPR digital media file according to an embodiment of the present application;
FIG. 12 is a schematic flow chart of universal encryption according to an embodiment of the present application; and
FIG. 13 is a schematic flow chart of user authentication encryption according to an embodiment of the present application.

### DETAILED DESCRIPTION

The technical solution of the present application is hereinafter described in detail with reference to the accompanying drawings. Apparently, the embodiments described below are for the exemplary purpose only, without covering all embodiments of the present application. All other embodiments obtained by persons of ordinary skill in the art based on the embodiments of the present application without creative efforts shall fall within the protection scope of the present application.

In a specific embodiment of the present application, an MPR code is adopted as a two-dimensional code of an MPR publication, and a reading device may pronounce by identifying the two-dimensional code, so as to implement the multimedia reading objective. In the embodiment of the present application, the MPR code may be a digital code in a structure of matrix two-dimensional bar code, and relates to a digital media file such as audio/video relevant to printing image-text, so that a reader may synchronously listen to or watch corresponding multimedia content with the help of a related electronic device (such as a corresponding reading device) at the same time of reading.

The MPR code includes a prepositive code, and the prepositive code in the MPR code is used for uniquely identifying an MPR publication. Accordingly, in the following embodiments, the MPR may be an MPR publication, and the unique code of the cross-carrier relating relationship of the MPR may be a prepositive code of an MPR code. It should be particularly noted that, the unique code identifies a relating relationship between two or more different carrier forms instead of identifying one specific carrier form (such as that of a paper book, or that of an electronic file), so that all relating points in a printing reading material are unique codes.

In a specific embodiment of the present application, the network platform manages the unique code of the cross-carrier relating relationship of the MPR, so as to implement management networking and automatization in one aspect, and ensure that when a publisher publishes publications, different encoding codes are used for different publications in another aspect.

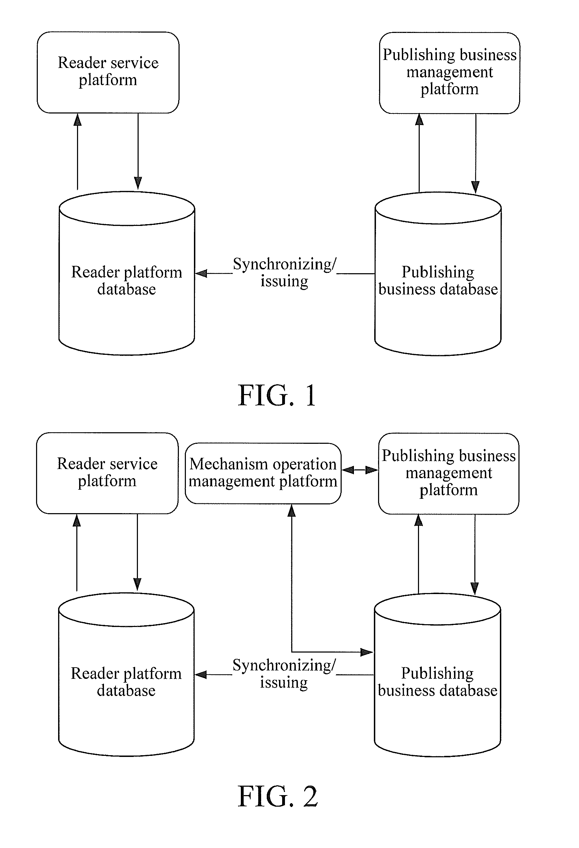

Embodiments of the present application are described hereinafter with reference to accompanying drawings. FIG. 1 is a schematic view of a specific formation of a network platform according to an embodiment of the present application. The network platform system is used for implementing publishing and using services for an MPR by managing a unique code of a cross-media relating relationship of the MPR, and includes a publishing business management platform, a reader service platform, a publishing business database and a reader platform database.

The publishing business management platform as a platform interacting with a publisher obtains information from the publisher, issues information to the publisher, and particularly issues the unique code of the cross-carrier relating relationship of the MPR to the publisher, in which, the unique code of the cross-carrier relating relationship of the MPR is used for uniquely identifying a cross-carrier relating relationship of the MPR, so as to ensure uniqueness of all codes generated under a specific unique code.

The unique code of the cross-carrier relating relationship of the MPR may be issued in a form of authorization file and stored. After obtaining the authorization file, the publisher can only edit other codes in the authorization file except for the unique code of the cross-carrier relating relationship of the MPR. For example, for an MPR publication, n bits (such as, 10 bits) in an authorization file are a prepositive code, the prepositive code and the MPR publication are in a one-to-one correspondence, and after obtaining the authorization file, the publisher can only encode other codes except for the prepositive code (such as, a postpositive code), and aggregation of these codes may identify information of a certain paragraph in a certain publication.

The publishing business management platform is further used for storing multimedia information of the MPR submitted by the publisher in the publishing business database, and synchronizing/issuing data in the publishing business database to the reader platform database (such as, synchronizing/issuing data in the publishing business data to the reader platform database according to confirmation information from the organization operation management platform, where the synchronized data may be multimedia information). Meanwhile, the publishing business management platform may further perform other operations on the data in the publishing business database.

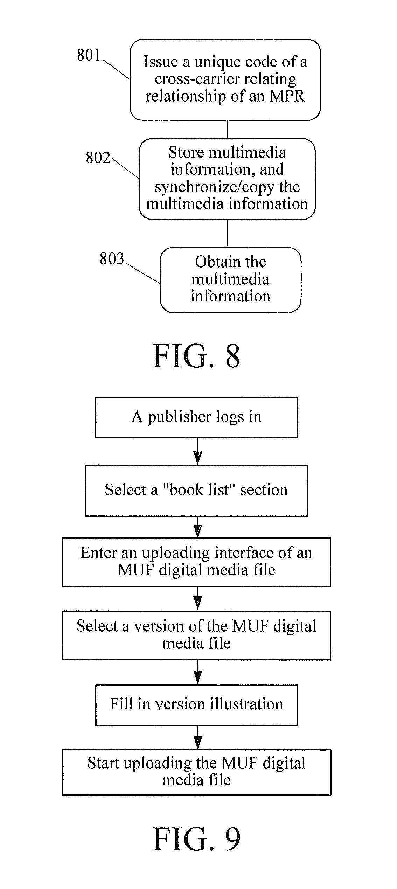

For example, the multimedia information of the MPR may be information of an MUF digital media file. The foregoing procedure may be as follows, the publisher logs in to a "book list" section provided by the publishing business management platform, enters an uploading interface of the MUF digital media file, then selects a version of the MUF digital media file (or meanwhile fills in version illustration), and then uploads the corresponding MUF digital media file to the publishing business database of the network platform through the publishing business management platform 1, as shown in FIG. 9.

The reader service platform is connected to the reader platform database, and is used for obtaining the multimedia information from the reader platform database according to a request submitted by a reader, and providing the multimedia information to the reader.

As shown in FIG. 2, the system may further include an organization operation management platform. The organization operation management platform may, as a management platform of a publication manager, obtain information submitted by the publisher through the publishing business management platform, and manage the publication by managing the unique code (such as, MPR prepositive code) of the cross-carrier relating relationship of the MPR.

For example, the organization operation management platform may perform verification on the request information of the unique code of the cross-carrier relating relationship of the MPR obtained by the publishing business management platform, and obtain the unique code of the cross-carrier relating relationship of the MPR after the verification is passed (may inform the publisher of the reason why the verification is not passed if the verification is not passed, and definitely, may also perform no processing).

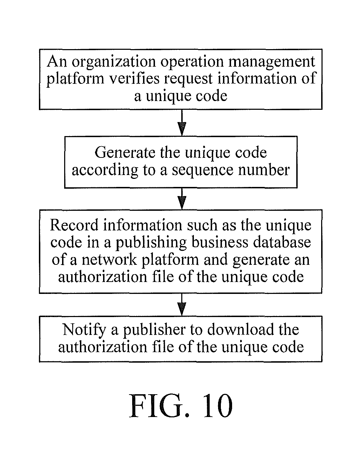

Further, the organization operation management platform may perform verification on the request information of the unique code of the cross-carrier relating relationship of the MPR obtained by the publishing business management platform; and generate the unique code of the cross-carrier relating relationship of the MPR according to a sequence number after the verification is passed, and store the unique code of the cross-carrier relating relationship of the MPR in the publishing business database of the network platform, where the information of the unique code of the cross-carrier relating relationship of the MPR may exist in a form of authorization file; and notify the publisher to obtain the information of the unique code of the cross-carrier relating relationship of the MPR, as shown in FIG. 10.

The publishing business management platform and the organization operation management platform may further implement more management functions. For example, the publishing business management platform is used for generating a management request of the unique code of the cross-carrier relating relationship of the MPR according to a request of the publisher, and sending the management request of the unique code of the cross-carrier relating relationship of the MPR to an organization operation management platform; accordingly, the organization operation management platform is further used for performing a management operation according to the received management request of the unique code of the cross-carrier relating relationship of the MPR. The management request includes a revocation request or postponement request, and the management operation includes revoking the unique code of the cross-carrier relating relationship of the MPR or postponing service life of the unique code of the cross-carrier relating relationship of the MPR.

Furthermore, the organization operation management platform may further be used for converting the multimedia information of the MPR stored in the publishing business database of the network platform, obtaining multimedia information of a standard MPR and storing the multimedia information in the publishing business database of the network platform.

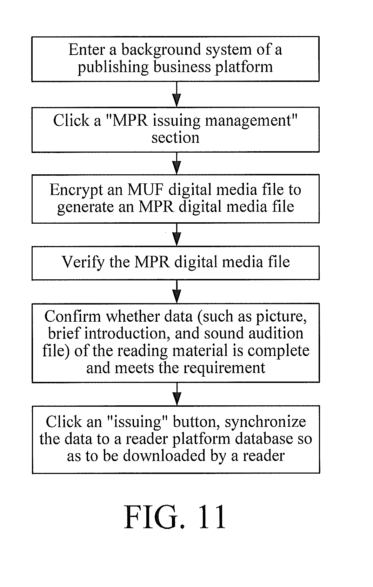

For example, the organization operation management platform, through a "MPR issuing management" section of the publishing business management platform, encrypts the MUF digital media file stored in the publishing business database of the network platform to generate an MPR digital media file, then verifies the MPR digital media file, and confirms whether corresponding data (such as, picture, brief introduction, and sound audition file) is complete and meets requirements; and if it is verified that the confirmation is inerrable, synchronizes the data in the publishing business database to the reader platform database through an issuing function so as to be downloaded and used by a reader, as shown in FIG. 11.

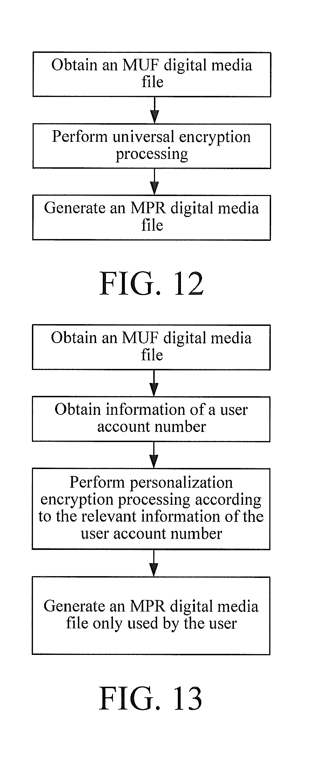

The encryption may be performed in a plurality of encryption manners: such as the universal encryption manner shown in FIG. 12, namely, DRM encryption processing is performed on the MUF digital media file stored in the database of the network platform, the MPR digital media file is obtained, the MPR digital media file is only capable of being used together with a specific printing material. For example, If a publisher makes and issues multimedia information (such as voice file) of an MPR code, and publishes a printing material corresponding to the MPR code, a user can normally use the multimedia information only on the printing material, such as, perform corresponding voice explanation on a correct text or image.

Alternatively, FIG. 13 shows a user authentication encryption manner, namely, obtaining information of a user account number of the reader, performing personalization encryption processing on the MUF digital media file stored in the database of the network platform according to the information of the user account number, and obtaining an encrypted multimedia file identified only by a reader using the user account number and using an MPR reading tool.

The two encryption manners may be overlapped and used, namely, twofold encrypted, or may be separately used.

Accordingly, after the reader obtains the encrypted MPR digital media file, a corresponding MPR reading tool may decrypt the encrypted MPR digital media file before playing, and the decrypted file may be played. If DRM encryption is performed, DRM decryption is correspondingly adopted; if personalization encryption on the information of the user account number is adopted, the information of the user account number needs to be obtained during the corresponding decryption, and then the MPR digital media file is decrypted according to the information of the user account number.

Digital copyright protection may be implemented through the foregoing encryption and decryption, the digital copyright protection is mainly to protect copyright benefit and illegal diffusion is forbidden. The technology support system of the specific method is a background or in an implicit form (relative to the reader and the publisher), is technical processing about providing consistency between a publisher making procedure, uploading and issuing of a digital media file, and a technical format of a reading device, identification and reading reliability and copyright protection. The technology processing is automatically generated in a system running procedure, is the underlying technical guarantee, dispenses with mastery and intervention of the publisher and the reader, is maintained and managed by professionals, and does not cause any technical obstacle or difficulty for the publisher and the reader.

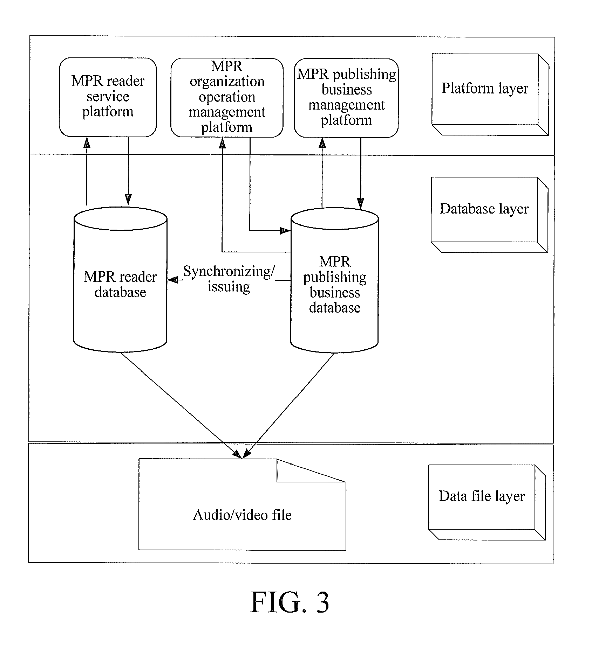

FIG. 3 is a schematic view of a hierarchy formation of a specific architecture of a network platform system according to an embodiment of the present application. This embodiment shows a relationship among an MPR reader service platform, an MPR organization operation management platform, an MPR publishing business management platform and a database. The database includes an MPR reader database and an MPR publishing business database, and data may be copied between the two databases. According to the difference between specific data characteristics, the copying may be synchronous copying, or may be asynchronous copying; a single file may be copied, or files in batch may be copied. As shown in the drawings, files stored in the two databases may include audio/video files.

The data in the MPR reader database is downloaded and used by the reader, the data in the MPR publishing business database is used by the publisher and the management organization, and by controlling the synchronized/issued content in the two databases and the syncluonizing/issuing opportunity, the MPR reader service platform in the network platform system may interact with other platforms.

The foregoing databases may adopt different database cluster technologies such as mature database cluster solutions from Oracle, Sybase, and SQL Server, and the common Master/Slave provided by MySQL is also a similar scheme.

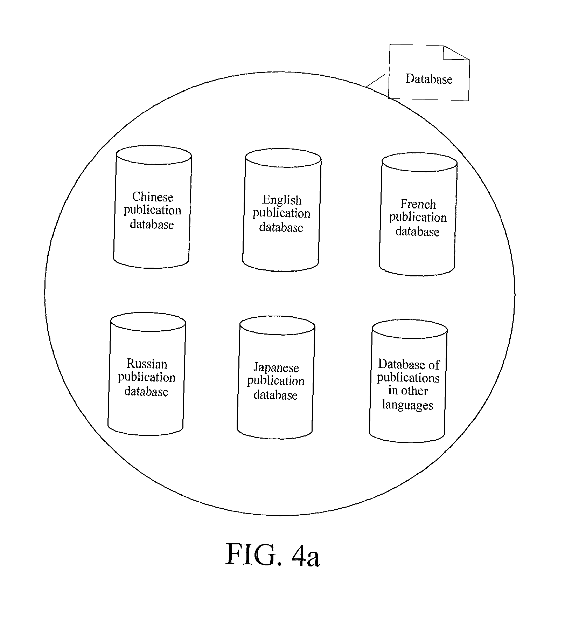

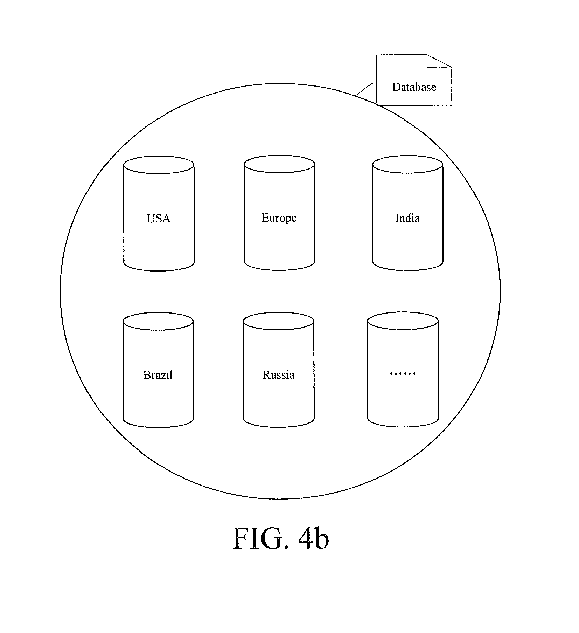

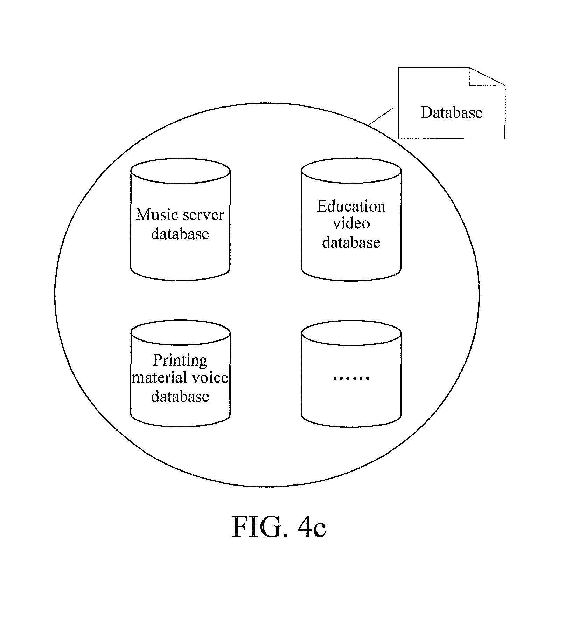

In the embodiment of the present application, the MPR network platform system may support a plurality of different languages, may have a zone-based architecture and may have a type-based architecture. In the database architecture aspect, databases of different language versions, data of different zones, and a type-based distributed database need to be designed. FIG. 4a is a schematic view of a specific formation of a multilingual database; FIG. 4b is a schematic view of a specific formation of a zone-based database; FIG. 4c shows a type-based distributed database. The "database" in the foregoing accompanying drawing refers to the reader platform database or the publishing business database.

To further describe embodiments of the present application, functions and implementation manners of the publishing business management platform, the organization operation management platform and the reader service platform in some specific embodiments of the present application are separately described in detail below.

### 1. MPR publishing business management platform

The MPR publishing business management platform is a business platform on which an MPR publication international affairs organization and an MPR publisher perform business contact and information transfer, provides businesses and relevant services such as use of an MPR code and network technology support for the MPR publisher, and mainly has the following several functions.

### 1.1 Applying for prepositive code of MPR code

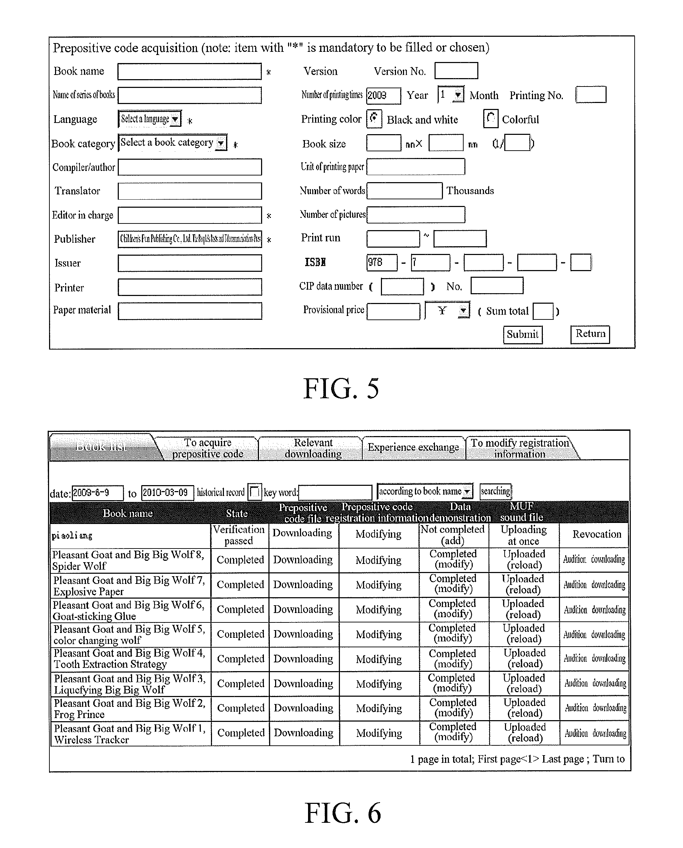

When applying for a prepositive code of an MPR code, the MPR publisher may, through a user use interface (such as, web page) provided by the MPR publishing business management platform, fill in registration data and content information of a book in the interface, such as publisher, publication name, ISBN, and editor in charge. FIG. 5 shows an interface of "prepositive code applying".

For example, when needing to obtain an index code of an MPR, a publishing unit (organization) needs to fill in registration data (such as reading material name, publisher, and ISBN) of the MPR on the MPR publishing business management platform. The MPR publishing business management platform issues an index code (namely, a specific form of prepositive code) to the reading material from the publisher according to the method in the embodiment of the present application.

The index code of the MPR may be a 10-bit digital sequence generated according to a sequence number, and is issued in a form of an electronic file with *.mra as the file suffix name (namely, the authorization file described in the foregoing embodiment), and meanwhile information such as the index code of the MPR is recorded into a database. The publishing unit (organization) completes obtaining of the index code of the MPR as soon as completing downloading of the electronic file. The MPR publishing business management platform issues and manages the index code of the MPR in a unified manner, so as to ensure uniqueness of the index code thereof.

### 1.2 Prepositive code acquisition

The MPR publishing business management platform applies to the MPR organization operation management platform (or referred to as, MPR center organization operation platform) for a prepositive code, and after the MPR publishing international affairs organization confirms that the application is valid, the MPR organization operation management platform generates an electronic file of a prepositive code of the book and registers a link address of the file, and the MPR organization operation management platform provides the link address of the file to the MPR publishing business management platform or directly provides the electronic file to the MPR publishing business management platform, so that the MPR publisher downloads the electronic file on the business operation interface of the publishing business platform, as shown in FIG. 6.

### 1.3 Prepositive code abandonment

If it is required to abandon publishing of the book due to reasons such as change of the publishing plan, the MPR publisher should cancel or revoke the prepositive code of the book in time on the member operation interface of the MPR publishing business management platform.

### 1.4 Sound file packet uploading

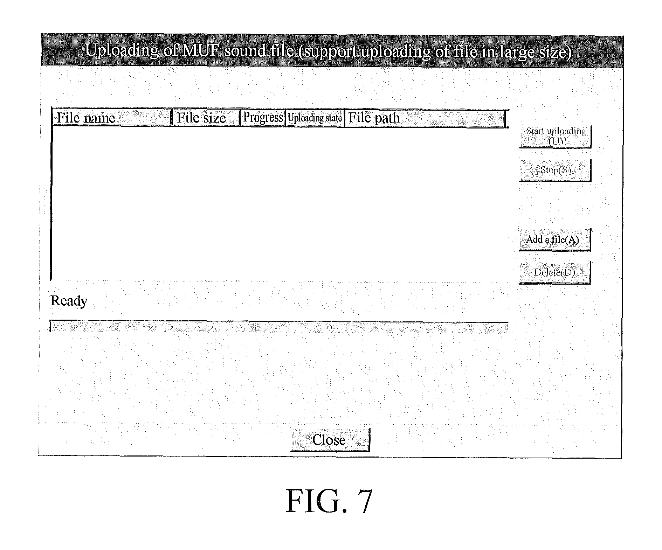

After completing code laying and type setting of the book, the MPR publisher uploads a sound file packet (file type: *.muf) of the book through the MPR publishing business management platform, and the MPR publishing business management platform stores the uploaded file packet in a corresponding database. The uploading interface may be shown in FIG. 7.

For example, after completing the making of a digital media file (file type: *.muf) corresponding to the MPR, the publishing unit (organization) uploads this file to the MPR publishing business management platform through a network. The MPR publishing business management platform queries for a database to obtain information such as name, publisher, and index code of the reading material, and converts, through technologies such as encryption according to the information, the MUF digital media file into an MPR digital media file (file type: *.mpr) which can only be identified by an MPR reading tool and is provided to a user for downloading.

The method through which the MPR reading tool identifies the MPR digital media file is that: the file name (not containing the file suffix name) of the MPR digital media file is the character series obtained from the index code of the reading material through duotricemary notation conversion. For example, the index code of the first volume of the MPR "Chinese" of the first grade is: 0070000001, and the MPR digital media file corresponding to the reading material should be named: 022O7C1.mpr.

### 1.5 Downloading of MPR digital media file

For convenience of sound checking of the MPR publisher, the MPR publisher may download the MPR digital media file of the book on the business operation interface of the publishing business management platform. The MPR may meet multilingual requirements, so a website in various different language versions should be developed on the MPR publishing business management platform correspondingly,

### 2. MPR organization operation management platform

The MPR organization operation management platform is a background system of the MPR publishing business management platform, and is a carrier of an MPR publication database and an MPR digital media file. For various different languages, the MPR organization operation management platform also has various different language versions, and mainly has the following several functions.

### 2.1 Issuing of prepositive code

The MPR organization operation management platform verifies book registration data and book content recorded by the MPR publishing business management platform and submitted by the publisher, generates a prepositive code electronic file to be sent to the MPR publisher after the verification is passed, and sends the link address of the file or the file to the MPR publishing business management platform. For example, if two platforms share a database, only the address of the electronic file in the database may be notified to the MPR publishing business management platform.

### 2.2 Abandonment of prepositive code

The MPR organization operation management platform may abandon use of the prepositive code at any time according to the requirement submitted by the MPR publisher through the MPR publishing business management platform.

### 2.3 Postponement of prepositive code

If the MPR publisher does not complete publishing of the book in the period of validity, the MPR organization operation management platform may postpone the service life of the prepositive code according to the requirement submitted by the MPR publisher through the MPR publishing business management platform.

### 2.4 Uploading of MPR digital media file

The MPR organization operation management platform may perform processing such as conversion and/or encryption on a digital media file packet (such as, sound file packet) uploaded by the MPR publisher to generate a corresponding standard MPR digital media file (*.mpr), and then upload the corresponding standard MPR digital media file to an MPR publishing business platform website.

### 2.5 Counting of MPR

The MPR organization operation management platform may count the number of MPRs, and perform data collection to form a report.

### 2.6 Management of MPR publisher

The MPR organization operation management platform may manage information of the MPR publisher, such as add an MPR publisher, and modify MPR publisher data.

### 3. MPR reader service platform

The MPR reader service platform is a dedicated network platform connecting the MPR and the MPR reader. The reader of the MPR may perform a corresponding operation on the platform, such as, user registration, purchase of the MPR, and downloading.

It can be known through the above description that, in the network platform system in the embodiment of the present application, the platform may issue the unique code of the cross-carrier relating relationship of the MPR in a unified manner, so as to, in an aspect, ensure uniqueness of the unique code of the cross-carrier relating relationship of the MPR obtained by the publisher, avoid possibility that different publications share the same encoding code, and improve user reading experience; and in another aspect, implement networking management of multimedia reading publications, and improve the management efficiency conveniently.

By implementing embodiments of the present application, automatization and unification for publishing and using services of an MPR may further be implemented, and a digital publishing service platform with copyright protection is provided for a publisher. In still another aspect, the publishing business database may copy basic data (such as book name, author, and ISBN) of the MPR into the reader platform database through this operation manner of synchronizing/issuing, while the basic data is only readable in the reader service platform; in doing so, data backup data is implemented, and furthermore data consistency is ensured. However, how the reader service platform uses the basic data to perform some other relating applications (such as online shopping) may be designed on the reader platform according to the product plan, which does not destroy the original basic data.

Accordingly, FIG. 8 is a specific flow chart of a network platform management method according to an embodiment of the present application. The method is used in the network platform system in the foregoing embodiment, and implements publishing and using services for an MPR by managing a unique code of a cross-media relating relationship of the MPR, and the network platform system includes a publishing business management platform, a reader service platform, a publishing business database and a reader platform database, and the method includes the following steps.

801: The publishing business management platform issues a unique code of a cross-carrier relating relationship of an MPR to a publisher, in which, the unique code of the cross-carrier relating relationship of the MPR is used for uniquely identifying a cross-carrier relating relationship of the MPR, so as to ensure uniqueness of all codes generated under a specific unique code.

802: The publishing business management platform stores multimedia information of the MPR submitted by the publisher in the publishing business database, and synchronizes/issues data in the publishing business database to the reader platform database.

803: The reader service platform obtains the multimedia information from the reader platform database according to a request submitted by a reader, and provides the multimedia information to the reader.

The MPR includes an MPR publication, the unique code of the cross-carrier relating relationship of the MPR includes a prepositive code of an MPR code, and information of the unique code of the cross-carrier relating relationship of the MPR is stored and issued in a form of authorization file. Meanwhile, there is no necessary sequence between step 801 and steps 802 to 803. For example, if the MPR in step 801 and the MPR in steps 802 to 803 are not the same object, steps 802 to 803 may also be executed before step 801. However, it should be noted that, the MPR in steps 802 to 803 also has a unique code of a cross-carrier relating relationship corresponding to the MPR.

Except that the issuing of the prepositive code may be managed, other management may be further implemented as follows:
A. The publishing business management platform generates a management request of the unique code of the cross-carrier relating relationship of the MPR according to a request of the publisher, and sends the management request of the unique code of the cross-carrier relating relationship of the MPR to the organization operation management platform, where the management request includes a revocation request or postponement request, and the management operation includes revoking the unique code of the cross-carrier relating relationship of the MPR or postponing service life of the unique code of the cross-carrier relating relationship of the MPR.
B. The organization operation management platform performs a management operation according to the received management request of the unique code of the cross-carrier relating relationship of the MPR.

In another aspect, this method may further include one or more of the following steps.
1. The organization operation management platform converts the multimedia information of the MPR stored in the publishing business database, obtains multimedia information of a standard MPR and stores the multimedia information in the publishing business database.
2. The organization operation management platform may perform universal encryption processing on the multimedia information of the MPR stored in the database of the network platform, and obtain the MPR only capable of being commonly used together with a printing material; or the organization operation management platform obtains information of a user account number of the reader, performs personalization encryption processing on the multimedia information of the MPR stored in the database of the network platform according to the information of the user account number, and obtains an encrypted multimedia file identified only by a reader using the user account number and using an MPR reading tool.
3. The publishing business management platform obtains, according to request information of the unique code of the cross-carrier relating relationship of the MPR submitted by the publisher, the unique code of the cross-carrier relating relationship of the MPR from the organization operation management platform; and the organization operation management platform performs verification on the request information of the unique code of the cross-carrier relating relationship of the MPR submitted by the publishing business management platform, obtains the unique code of the cross-carrier relating relationship of the MPR after the verification is passed, and provides the unique code of the cross-carrier relating relationship of the MPR to the publishing business management platform.

In step 3, the performing, by the organization operation management platform, verification on the request information of the unique code of the cross-carrier relating relationship of the MPR submitted by the publishing business management platform, obtaining the unique code of the cross-carrier relating relationship of the MPR after the verification is passed, and providing the unique code of the cross-carrier relating relationship of the MPR to the publishing business management platform may further include:
performing, by the organization operation management platform, verification on the request information of the unique code of the cross-carrier relating relationship of the MPR obtained by the publishing business management platform; and
generating the unique code of the cross-carrier relating relationship of the MPR according to a sequence number after the verification is passed, generating an authorization file according to the unique code of the cross-carrier relating relationship of the MPR, and storing the authorization file in the database of the network platform, in which the authorization file includes the unique code of the cross-carrier relating relationship of the MPR, and the publisher is capable of obtaining the authorization file through the publishing business management platform.

Meanwhile, in the embodiment of the present application, a real-time and online service of a multimedia reading material may further be implemented, namely:
seeking, by an application of a client, according to printing reading material information including the unique code of the cross-carrier relating relationship of the MPR, an address of a corresponding printing reading material database, in which the multimedia information of the MPR is stored in the printing reading material database; and
obtaining multimedia information corresponding to the printing reading material information in the corresponding printing reading material database according to the address of the printing reading material database, so as to implement real-time and online reading.

In the above procedure, the application of the client may first decode the stored printing reading material information including the unique code of the cross-carrier relating relationship of the MPR, obtain an address stored in the multimedia information (such as including a database URL) after the decoding, and may be connected to a corresponding database according to the address (there may be a plurality of databases for one IP address). The address stored in the multimedia information obtained through the decoding further includes a specific position of the multimedia information in the corresponding database, and the multimedia information may be obtained and be sent back to the application of the client. In this way, the user may perform applications such as multimedia information reading in real time and on line by using the application to perform a corresponding operation.

The specific explanation in the foregoing method embodiment is consistent with that in the preceding embodiment, and is not repeated herein. The platforms in the embodiments of the present application may be support platforms on which a website runs, and the interface on which the user operates may be a user interface of the website.

The network platform management method in the embodiment of the present application may issue the unique code of the cross-carrier relating relationship of the MPR in a unified manner, so as to, in an aspect, ensure uniqueness of the unique code of the cross-carrier relating relationship of the MPR obtained by the publisher, avoid possibility that different publications share the same encoding code, and improve user reading experience; and in another aspect, implement networking management of multimedia reading publications, and improve the management efficiency conveniently. By implementing embodiments of the present application, automatization and unification for publishing and using services of an MPR may further be implemented, and a digital publishing service platform with copyright protection is provided for a publisher. In still another aspect, the publishing business database may copy basic data (such as book name, author, and ISBN) of the MPR into the reader platform database through this operation manner of synchronizing/issuing, while the basic data is only readable in the reader service platform; in doing so, data backup data is implemented, and furthermore data consistency is ensured. However, how the reader service platform uses the basic data to perform some other relating applications (such as online shopping) may be designed on the reader platform according to the product plan, which does not destroy the original basic data.

Through the descriptions of the preceding embodiments, those skilled in the art may understand that the embodiments may be implemented by using hardware only or by using software and a necessary universal hardware platform. Based on such understandings, the technical solution or the part that makes contributions to the prior art may be essentially embodied in the form of a software product. The software product may be stored in a computer readable storage medium, which can be a magnetic disk, a Compact Disk Read-Only Memory (CD-ROM), a Read-Only Memory (ROM) or a Random Access Memory (RAM). The software product includes a number of instructions that enable a computer device (a personal computer, a server, or a network device) to execute the methods provided in the embodiments.

The above embodiments are merely provided for elaborating the technical solution, but not intended to limit the technical solution. Modifications, equivalent substitutions and improvements made within the spirit and principle of the embodiments should fall within the protection scope of the technical solution.

## Claims

1. A network platform system, used for implementing publishing and using services for a Multimedia Print Reader (MPR) by managing a unique code of a cross-media relating relationship of the MPR, and comprising a publishing business management platform, a reader service platform, a publishing business database and a reader platform database, wherein
the publishing business management platform is used for issuing a unique code of a cross-carrier relating relationship of an MPR to a publisher, wherein, the unique code of the cross-carrier relating relationship of the MPR is used for uniquely identifying a cross-carrier relating relationship of the MPR, so as to ensure uniqueness of all codes generated under a specific unique code; and is further used for storing multimedia information of the MPR submitted by the publisher in the publishing business database, and synchronizing/issuing data in the publishing business database to the reader platform database;
the reader service platform is connected to the reader platform database, and is used for obtaining the multimedia information from the reader platform database according to a request submitted by a reader, and providing the multimedia information to the reader.

2. The system according to claim 1, further comprising: a organization operation management platform, wherein
the publishing business management platform is further used for, according to request information of the unique code of the cross-carrier relating relationship of the MPR submitted by the publisher, obtaining the unique code of the cross-carrier relating relationship of the MPR from the organization operation management platform; and
the organization operation management platform is used for performing verification on the request information of the unique code of the cross-carrier relating relationship of the MPR obtained by the publishing business management platform, obtaining the unique code of the cross-carrier relating relationship of the MPR after the verification is passed, and providing the unique code of the cross-carrier relating relationship of the MPR to the publishing business management platform.

3. The system according to claim 1, wherein
the publishing business management platform is further used for generating a management request of the unique code of the cross-carrier relating relationship of the MPR according to a request of the publisher, and sending the management request of the unique code of the cross-carrier relating relationship of the MPR to the organization operation management platform; and
the organization operation management platform is further used for performing a management operation according to the received management request of the unique code of the cross-carrier relating relationship of the MPR,
wherein, the management request comprises a revocation request or postponement request, and the management operation comprises revoking the unique code of the cross-carrier relating relationship of the MPR or postponing service life of the unique code of the cross-carrier relating relationship of the MPR.

4. The system according to any one of claims 1 to 3, wherein the MPR comprises an MPR publication, the unique code of the cross-carrier relating relationship of the MPR comprises a prepositive code of an MPR code, and information of the unique code of the cross-carrier relating relationship of the MPR is stored and issued in a form of authorization file.

5. The system according to any one of claims 1 to 3, wherein the publishing business database or reader platform database comprises a zone-based or language-based database; or the publishing business database or reader platform database is a distributed database.

6. The system according to claim 4, wherein
the organization operation management platform is further used for performing universal encryption processing on the multimedia information of the MPR stored in the database of the network platform, and obtaining the MPR only capable of being commonly used together with a printing material; or
the organization operation management platform is further used for obtaining information of a user account number of the reader, performing personalization encryption processing on the multimedia information of the MPR stored in the database of the network platform according to the information of the user account number, and obtaining an encrypted multimedia file identified only by a reader using the user account number and using an MPR reading tool.

7. The system according to any one of claims 1 to 3, wherein the organization operation management platform is further used for:
performing verification on the request information of the unique code of the cross-carrier relating relationship of the MPR obtained by the publishing business management platform; and
generating the unique code of the cross-carrier relating relationship of the MPR according to a sequence number after the verification is passed, generating an authorization file according to the unique code of the cross-carrier relating relationship of the MPR, and storing the authorization file and the information of the unique code of the cross-carrier relating relationship of the MPR in the database of the network platform, wherein the authorization file comprises the unique code of the cross-carrier relating relationship of the MPR, and the publisher is capable of obtaining the authorization file through the publishing business management platform.

8. A network platform management method, wherein the method is used in a network platform system, and implements publishing and using services for a Multimedia Print Reader (MPR) by managing a unique code of a cross-media relating relationship of the MPR, the system comprises a publishing business management platform, a reader service platform, a publishing business database and a reader platform database, and the method comprises:
issuing, by the publishing business management platform, a unique code of a cross-carrier relating relationship of an MPR to a publisher, wherein, the unique code of the cross-carrier relating relationship of the MPR is used for uniquely identifying a cross-carrier relating relationship of the MPR, so as to ensure uniqueness of all codes generated under a specific unique code;
storing, by the publishing business management platform, multimedia information of the MPR submitted by the publisher in the publishing business database, and synchronizing/issuing data in the publishing business database to the reader platform database; and
obtaining, by the reader service platform, the multimedia information from the reader platform database according to a request submitted by a reader, and providing the multimedia information to the reader.

9. The method according to claim 8, further comprising:
generating, by the publishing business management platform, a management request of the unique code of the cross-carrier relating relationship of the MPR according to a request of the publisher, and sending the management request of the unique code of the cross-carrier relating relationship of the MPR to the organization operation management platform; and
performing, by the organization operation management platform, a management operation according to the received management request of the unique code of the cross-carrier relating relationship of the MPR,
wherein, the management request comprises a revocation request or postponement request, and the management operation comprises revoking the unique code of the cross-carrier relating relationship of the MPR or postponing service life of the unique code of the cross-carrier relating relationship of the MPR.

10. The method according to claim 8, wherein the MPR comprises an MPR publication, the unique code of the cross-carrier relating relationship of the MPR comprises a prepositive code of an MPR code, and information of the unique code of the cross-carrier relating relationship of the MPR is stored and issued in a form of authorization file.

11. The method according to any of claims 8 to 10, wherein the system further comprises an organization operation management platform, and the method further comprises:
obtaining, by the publishing business management platform, according to request information of the unique code of the cross-carrier relating relationship of the MPR submitted by the publisher, the unique code of the cross-carrier relating relationship of the MPR from the organization operation management platform; and
performing, by the organization operation management platform, verification on the request information of the unique code of the cross-carrier relating relationship of the MPR submitted by the publishing business management platform, obtaining the unique code of the cross-carrier relating relationship of the MPR after the verification is passed, and providing the unique code of the cross-carrier relating relationship of the MPR to the publishing business management platform.

12. The method according to any one of claims 8 to 10, further comprising:
seeking, by an application of a client, according to printing reading material information comprising the unique code of the cross-carrier relating relationship of the MPR, an address of a corresponding printing reading material database, wherein the multimedia information of the MPR is stored in the printing reading material database; and
obtaining multimedia information corresponding to the printing reading material information in the corresponding printing reading material database according to the address of the printing reading material database, so as to implement real-time and online reading.

13. The method according to claim 10, wherein converting, by the organization operation management platform, the multimedia information of the MPR stored in the publishing business management platform comprises:
performing, by the organization operation management platform, universal encryption processing on the multimedia information of the MPR stored in the database of the network platform, and obtaining the MPR only capable of being commonly used together with a printing material; or
obtaining, by the organization operation management platform, information of a user account number of the reader, performing personalization encryption processing on the multimedia information of the MPR stored in the database of the network platform according to the information of the user account number, and obtaining an encrypted multimedia file identified only by a reader using the user account number and using an MPR reading tool.

14. The method according to claim 11, wherein the performing, by the organization operation management platform, verification on the request information of the unique code of the cross-carrier relating relationship of the MPR submitted by the publishing business management platform, obtaining the unique code of the cross-carrier relating relationship of the MPR after the verification is passed, and providing the unique code of the cross-carrier relating relationship of the MPR to the publishing business management platform comprises:
performing, by the organization operation management platform, verification on the request information of the unique code of the cross-carrier relating relationship of the MPR obtained by the publishing business management platform; and
generating the unique code of the cross-carrier relating relationship of the MPR according to a sequence number after the verification is passed, generating an authorization file according to the unique code of the cross-carrier relating relationship of the MPR, and storing the authorization file in the database of the network platform, wherein the publisher is capable of obtaining the authorization file through the publishing business management platform.
